(19) 

Europäisches
Patentamt
European
Patent Office
Office européen
des brevets

(11) **EP 4 368 394 A1**

(12) **EUROPEAN PATENT APPLICATION**
published in accordance with Art. 153(4) EPC

(43) Date of publication:
**15.05.2024  Bulletin 2024/20**

(21) Application number: **23765436.3**

(22) Date of filing: **06.06.2023**

(51) International Patent Classification (IPC):
**B33Y 80/00** *(2015.01)*    **B29C 64/118** *(2017.01)*
**B29C 64/314** *(2017.01)*    **B33Y 70/00** *(2020.01)*

(86) International application number:
**PCT/JP2023/021054**

(87) International publication number:
**WO 2024/062693 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **21.09.2022   JP 2022149875**

(71) Applicant: **Joto Techno Co., Ltd.
Chuo-ku
Osaka-shi, Osaka 541-0042 (JP)**

(72) Inventors:
• **AKIYAMA Yuki**
  **Hirakata-shi, Osaka 573-1132 (JP)**
• **AOKI Kenji**
  **Tokyo 422-8529 (JP)**

(74) Representative: **Grünecker Patent- und
Rechtsanwälte
PartG mbB
Leopoldstraße 4
80802 München (DE)**

(54)    **RESIN COMPOSITION FOR 3D PRINTING DEVICE, FILAMENT FOR 3D PRINTING DEVICE,
FABRICATED OBJECT, AND PELLET FOR 3D PRINTING DEVICE**

(57)    Provided are a resin composition for a stereo-forming apparatus, a filament for the stereo-forming apparatus, a molded object, and a pellet for the stereo-forming apparatus capable of improving adhesiveness to a stage or the like of a stereo-forming apparatus and moldability at the time of molding. The resin composition for a stereo-forming apparatus includes: a thermoplastic resin (A) and a polymer (B) having reactive groups and non-polar polymer molecular chains, wherein a weight-average molecular weight of the thermoplastic resin (A) is higher than a weight-average molecular weight of the polymer (B) having reactive groups and non-polar polymer molecular chains, and with respect to 100 parts by mass of the thermal plastic resin (A), the polymer (B) having reactive groups and non-polar polymer molecular chains is contained more than 10.3 parts by mass and 37 parts by mass or less.

[Fig.4]

**EP 4 368 394 A1**

**Description**

Technical Field

The present invention relates to a resin composition for a stereo-forming apparatus, a filament for a stereo-forming apparatus, a molded object, and a pellet for a stereo-forming apparatus. In particular, the present invention relates to a resin composition for a stereo-forming apparatus capable of forming a filament that can be used in a stereo-forming apparatus, a filament for a stereo-forming apparatus, a molded object, and a pellet for a stereo-forming apparatus.

Background Art

In recent years, a stereo-forming technique of a three-dimensional structure by a stereo-forming apparatus has been developed. For example, a material extrusion deposition type (an FDM system) stereo-forming apparatus (3D printer) for thermally melting and depositing a resin filament has been reduced in price. Therefore, not only in the manufacturing industry but also in a small scale business, an industrial high school, an individual, and the like, it is possible to manufacture a three-dimensional molded object without using a mold and manufacture a three-dimensional molded object having a shape that is difficult to shape with a mold. As a resin filament used in a stereo-forming apparatus, resin filaments constituted of polylactic acid (PLA resin), acrylonitrile-butadienestyrene resin (ABS resin), or the like, which are excellent in moldability and adhesion to a stage of the stereo-forming apparatus, are widely used. However, the PLA resin has high water absorption, has very poor post-processing properties, and is poor in physical properties such as impact resistance and chemical resistance. In addition, the ABS resin has good post-processing properties, but has high water absorption, and is likely to warp during molding.

Therefore, as a resin filament material, general-purpose resins such as polypropylene (PP), which have extremely low water absorption, excellent post-processing properties, and excellent impact resistance, chemical resistance, and the like, as compared with PLA and ABS, are attracting increasing attention. However, for example, PP has a problem in moldability because a warp occurs during molding.

Therefore, conventionally, a resin molding material for a stereo-forming apparatuses which contains a thermoplastic resin (A) contained 30% to 80% by mass, a thermoplastic elastomer (B) contained 1% to 45% by mass, and a modified agent (C) contained 0.5% to 15% by mass, and a tackifier resin (D) contained 5% to 35% by mass (provided that when the thermoplastic elastomer (B) is a functional group-imparted thermoplastic elastomer to which a functional group is imparted, the modified agent (C) may not be included.) in a molding material is known (see, for example, Patent Literature 1). According to the resin molding material for a stereo-forming apparatus according to Patent Literature 1, a general-purpose resin such as polypropylene resin can be used to provide a resin molding material for a stereo-forming apparatus used in the stereo-forming apparatus having low density, heat resistance, durability, impact resistance, molding suitability, and low shrinkage.

Citation List

Patent Literature

Patent Literature 1: JP 2020 -157609 A

Summary of Invention

Technical Problem

However, in a resin molding material for a stereo-forming apparatus described in Patent Literature 1, when a stereo-forming is performed, it is a requirement to attach a polyimide film on a stage of a stereo-forming apparatus and to apply a 3D stage sealant (water-soluble adhesive) on the polyimide film (see paragraph 0075 of Patent Literature 1). That is, in the conventional technologies including Patent Literature 1, it is not possible to ensure an adhesiveness for the stage of the resin molding material for a stereo-forming apparatus, and it is not possible to omit a step of applying adhesive to the stage or the film. This indicates that the resin molding material for a stereo-forming apparatus in the conventional technologies cannot ensure adhesiveness to the stage while ensuring moldability.

Therefore, a purpose of the present invention is to provide a resin composition for a stereo-forming apparatus, a filament for a stereo-forming apparatus, a molded object, and a pellet for a stereo-forming apparatus, which can improve an adhesiveness to a stage and a moldability during molding of a stereo-forming apparatus.

Solution to Problem

In order to achieve the above purpose, the present invention provides a resin composition for a stereo-forming apparatus used in an FDM system, comprising: a thermoplastic resin (A); and a polymer (B) having reactive groups and non-polar polymer molecular chains, wherein a weight-average molecular weight of the thermoplastic resin (A) is higher than a weight-average molecular weight of the polymer (B) having reactive groups and non-polar polymer molecular chains, with respect to 100 parts by mass of the thermal plastic resin (A), the polymer (B) having reactive groups and non-polar polymer molecular chains is contained more than 10.3 parts by mass and 37 parts by mass or less, the polymer (B) having reactive groups and non-polar polymer molecular chains is a graft-type polymer, and a value obtained by multiplying a ratio of a mass of the polymer (B) having reactive groups and non-polar polymer molecular chains to a total mass of the resin composition for stereo-forming apparatus by a graft ratio of the polymer (B) having reactive groups and non-polar polymer molecular chains is 0.165% or more and less than 0.57%.

In addition, in order to achieve the above purpose, the present invention provides a filament for a stereo-forming apparatus comprising a resin composition for a stereo-forming apparatus as described above.

Furthermore, in order to achieve the above purpose, the present invention provides a molded object comprising a resin composition for a stereo-forming apparatus described above. In addition, in order to achieve the above purpose, the present invention may provide a pellet for a stereo-forming apparatus comprising a resin composition for a stereo-forming apparatus described above.

Advantageous Effects of Invention

According to the resin composition for a stereo-forming apparatus, the filament for a stereo-forming apparatus, the molded object, and the pellet for a stereo-forming apparatus according to the present invention, a resin composition for a stereo-forming apparatus, a filament for a stereo-forming apparatus, a molded object, and a pellet for a stereo-forming apparatus, which can improve an adhesiveness to a stage and a moldability during modeling of a stereo-forming apparatus, can be provided.

Brief Description of Drawings

Fig. 1 is a graph showing a warp of a molded object with respect to MAPP type.
Fig. 2 shows graphs showing a comparison between measured values according to Examples and Comparative Examples and predicted values by a non-linear prediction model.
Fig. 3 shows graphs showing predicted values of warp of each MAPP obtained from a non-linear prediction model.
Fig. 4 is a graph showing relationships between amounts of reactive group introduced and amounts of warp of the resin composition for a stereo-forming apparatus according to Examples and the resin composition according to Comparative Examples.
Fig. 5 is a graph showing relationships between amounts of reactive group introduced and amounts of adhesive strength of the resin composition for a stereo-forming apparatus according to Examples and the resin composition according to Comparative Examples.
Fig. 6 is a graph showing an effect of addition of a component (C) on a warp.
Fig. 7 is a graph showing relationships between amounts of adhesive strength of the resin composition for a stereo-forming apparatus according to Examples and adhesive strength of the resin composition according to Comparative Examples, and amounts of warp.

Description of Exemplary Embodiments

First Exemplary Embodiment

As a resin filament (hereinafter sometimes referred to as a "filament") for a stereo-forming apparatus (3D printer), it is desirable to use a general-purpose resin such as polypropylene (PP), which has extremely low water absorption, good post-processing properties, excellent impact resistance, chemical resistance, and heat resistance and can be used in a variety of applications. However, PP, for example, has a large shrinkage rate of 1% to 2.5%, which tends to cause a large warp due to shrinkage during molding (low moldability), and it has extremely weak adhesiveness to a stage of the stereo-forming apparatus and a sheet (protective sheet, platform tape, etc.) placed on the stage and therefore, when it is molded on the stage, it peels off from the stage. Therefore, even when PP is used as a resin filament as it is, it cannot withstand practical use as a resin composition for a stereo-forming apparatus.

When manufacturing a molded object using a stereo-forming apparatus, the molded object may be manufactured on a stage of the stereo-forming apparatus or on a sheet that protects the stage. In this case, since an adhesiveness of PP is extremely weak, it is required to fix the molded object to the stage and a sheet by applying a predetermined adhesive to the stage or the sheet. When a molding is performed without applying adhesive, the molded object peels off from the stage or the sheet due to a lack of adhesive strength or a warp of the PP, making molding impossible. When an adhesive is applied on the stage or the sheet, not only a step of drying the adhesive after application is required, but also a bottom surface of the molded object and a surface of the stage or the sheet must be cleaned after molding. Furthermore, since a step of cleaning the stage or the sheet surface and applying an adhesive occurs each time a molding is performed, it is not suitable for a continuous production of molded objects.

There is also a method of adhering a molded object to a sheet by using a dedicated sheet made of PP (PP sheet) as the sheet. However, when the PP sheet is used, a bottom surface of the molded object and the PP sheet are fused, and the PP sheet component remains on the bottom surface of the molded object. Also, when the PP sheet is fused to the bottom surface of the molded object, it is required to replace the PP sheet. For this reason, since PP sheets offered commercially are expensive, the costs required for molding increases. Furthermore, when the PP sheet on the stage is replaced, cleaning the PP sheet component (adhesive component) remaining on the stage is troublesome. Although a protective sheet used in molding of such as a polylactic acid (PLA) does not have an adhesive effect on the stage, the protective sheet is resistant to tearing and can be used multiple times. No adhesive component remains on the stage, the molded object and the protective sheet do not fuse together, and no adhesive component of the protective sheet remains on the molded object. However, since the protective sheet does not have an adhesive effect, when a molding is performed with a stereo-forming apparatus using a resin filament constituted of PP, a molded object in a first layer is peeled off from the protective sheet and cannot be molded originally.

That is, since the adhesive and the sheet generally cannot be repeatedly used, it is required to re-bond the sheet and re-apply the adhesive each time molding is performed, and not only a labor for manufacturing and a labor for replacing the sheet but also resources such as the adhesive and the sheet have to be discarded. Therefore, when a general-purpose resin such as PP is used as the resin composition for a stereo-forming apparatus, at least an improvement in moldability (an improvement in warp and shrinkage rate corresponds to an improvement in moldability.) and an improvement in adhesiveness are required.

Here, the present inventors have found that, according to a resin composition for a stereo-forming apparatus in which a polymer (B) having reactive groups and non-polar polymer molecular chains (hereinafter, may be referred to as a "component (B)") is contained in a predetermined ratio with a thermoplastic resin (A) (hereinafter, may be referred to as a "component (A)") as constituent components of the resin composition for a stereo-forming apparatus, appropriate adhesiveness to a stage can be secured (and/or appropriate adhesiveness within a range in which a sheet placed on the stage is not damaged can be secured), and a warp can be reduced to an extent that molding can be performed. In particular, the present inventors have found that when the reactive group has hydrophilicity, and the component (B) is contained with the component (A) such that a value, obtained by multiplying a ratio of the amount of the component (B) to the total amount of the resin composition for a stereo-forming apparatus by a ratio obtained by subtracting an amount of the polymer before introduction of the reactive groups from the amount of the component (B) and dividing it by the amount of the polymer before introduction of the reactive groups is within a specific range, both an effect of improving adhesiveness and an effect of reducing warp can be achieved particularly preferable.

That is, the present inventor has found that by containing a polymer having a reactive group exhibiting hydrophilicity into a resin (thermoplastic resin) as a base of a resin composition for a stereo-forming apparatus in a specific ratio range, moldability can be improved, and an appropriate adhesive strength is exhibited. Here, an improvement in moldability means that a warp and a shrinkage occurring in a molded object can be reduced, and a molded object having a predetermined number of layers can be molded. Furthermore, an appropriate adhesive strength referred to a range of the adhesive strength of the resin composition for a stereo-forming apparatus to a stage and/or a protective sheet in which a molded object formed of the resin composition for a stereo-forming apparatus can be fixed to the stage and/or the protective sheet and can be detached from the stage and/or the protective sheet without causing damage to the protective sheet and the molded object after molding. The present invention has been created based on such findings.

<Overview of Resin Composition for A Stereo-forming Apparatus>

A resin composition for a stereo-forming apparatus according to an exemplary embodiment of the present disclosure contains a thermoplastic resin (A) and a polymer (B) having reactive groups and non-polar polymer molecular chains. Here, a weight-average molecular weight of the thermoplastic resin (A) is higher than a weight-average molecular weight of the polymer (B) having reactive groups and non-polar polymer molecular chains. A resin composition for a stereo-forming apparatus can be used with a stereo-forming apparatus to create a molded object without a need to apply adhesive to a general protective sheet (platform tape) for a stage that are placed on or attached to the stages of the stereo-forming apparatus.

In the present exemplary embodiment, the "molecular chain" refers to a configuration in which all or part of a polymer, an oligomer molecule, or a block that are composed of structural units that are connected linearly or branched form are included between terminal groups, branch points, or boundary structural units unique to polymers.

<Details of Resin Composition for A Stereo-forming Apparatus>

[Thermoplastic Resin (A)]

Thermoplastic resins (A) include styrene resins, acrylic resins, aromatic polycarbonate resins, aliphatic polycarbonate resins, aromatic polyester resins, aliphatic polyester resins, olefinic resins (for example, aliphatic polyolefin resins, cyclic olefinic resins), polyamide resins, polyphenylene ether resins, thermoplastic polyimide resins, polyacetal resins, poly-sulfone resins, and amorphous fluorine resins.

In the present exemplary embodiment, the thermoplastic resin (A) is preferably an olefinic resin, more preferably polypropylene, from a viewpoint of properties such as water absorption, post-processing properties, impact resistance, chemical resistance, and/or heat resistance. As polypropylene, either homo-polypropylene or random polypropylene can be used. From a viewpoint of being less likely to crystallize than homo-polypropylene and capable of further reducing a warp of a molded object, polypropylene is preferably random polypropylene (random copolymer).

[Polymer (B) Having Reactive Groups and Non-polar Polymer Molecular Chains]

The polymer (B) having reactive groups and non-polar polymer molecular chains according to the present exemplary embodiment is a polymer that has a reactive group capable of reacting with another substituent group, and of which molecular chain is substantially non-polar or hydrophobic. The component (B) according to the present exemplary embodiment may have a reactive group in the molecular chain, and it is not necessary to control a chain length of the reactive group. In addition, a part of the molecular chain may contain other structural units. Furthermore, a non-polar polymer of the molecular chain may have other groups different from the reactive group. Moreover, the component (B) is particularly preferably a graft-type polymer.

(Reactive group)

A reactive group include at least one hydrophilic group selected from the group consisting of succinic anhydride group, carbonyl group (for example, methoxycarbonyl group), and carboxyl group.

(Non-polar Polymer)

A non-polar polymer is a polymeric substance that does not have a permanent dipole, and is called a non-polar polymer even when it contains a permanent dipole derived from impurities that are mixed in under normal conditions of use or from additives that are normally added. Examples of non-polar polymer include polyethylene resin, polypropylene resin, and tetrafluoroethylene resin.

In the present exemplary embodiment, a non-polar polymer that is a molecular chain may be olefinic resins that are substantially non-polar or hydrophobic. Olefinic resins include resins that are homo-polymerized or copolymerized with two or more kinds of polypropylene, polyethylene, $\alpha$-olefins (for example, propylene, 1-butene, 1-pentene, etc.), ethylene/$\alpha$-olefin copolymers, ethylene/vinyl acetate copolymer resins, propylene/$\alpha$-olefin copolymers, and the like.

When the molecular chain is ethylene/vinyl acetate copolymer resin, (meth)acrylic resin, or the like, the reactive group may be a methoxycarbonyl group or the like contained in the molecular chain. In this case, the non-polar polymer according to the present exemplary embodiment shall refer to a molecular structure of a portion containing methoxycarbonyl group or the like (In this case, the molecular chain refers to a structure in which the molecular chain itself contains the reactive group. Further in this case, when the molecular chain portion excluding the reactive group is non-polar, the molecular chain is considered to be a non-polar polymer). Other reactive groups (reactive groups different from methoxycarbonyl group) may be separately introduced into ethylene/vinyl acetate copolymerized resin or (meth)acrylic resin by graft polymerization, etc.

The non-polar polymer is preferably at least one non-polar polymer selected from the group consisting of polypropylene, ethylene/vinyl acetate copolymer resin, and acrylic resin in terms of ease of availability, low specific gravity, versatility, physical properties, and/or processing properties. Of these, polypropylene is more preferable from a standpoint of physical properties. These olefinic resin may contain other units that can be copolymerized. These olefinic resins can be used singly or in combination of two or more.

(Polymer)

Examples of polymers including the above molecular chain and reactive group include various polymers in which the above molecular chain and the above reactive group are combined. Examples thereof include polypropylene, ethylene/vinyl acetate copolymer resin, and acrylic resin having at least one reactive group among the above reactive groups. As the polymer, a polymer in which a reactive group is bonded to a molecular chain like a pendant group is more preferable, and for example, a graft copolymer is preferable. Among the above polymers, from a viewpoint of imparting hydrophilicity to the resin composition for a stereo-forming apparatus, a maleic anhydride-modified polypropylene (MAPP), which has a maleic anhydride group as a reactive group and a polypropylene molecular chain, is most preferable.

(Molecular Weight)

A weight-average molecular weight of the component (B) may be lower than that of the component (A) from a viewpoint of ease of handling. From a viewpoint of reducing a warp of a molded object without increasing the warp, the weight-average molecular weight of the component (B) is preferably 100,000 or less, preferably 90,000 or less and 70,000 or less, and is more preferably 65,000 or less and even more preferably 60,000 or less. In addition, from a viewpoint of ensuring an effect of reducing the warp of the molded object, the weight-average molecular weight of the component (B) is preferably 20,000 or more, preferably 25,000 or more and preferably 30,000 or more, and is more preferably 40,000 or more, and even more preferably 50,000 or more. The weight-average molecular weight can be obtained using a high-temperature gel permeation chromatography (high-temperature GPC) on polystyrene conversion basis and then calculated in polypropylene conversion basis using the Q factor.

(Graft Ratio)

When the component (B) is a graft-type polymer (that is, a graft copolymer), an adhesive strength of the resin composition for a stereo-forming apparatus is improved by having the reactive group. However, from a viewpoint of further improving the adhesive strength of the resin composition for a stereo-forming apparatus, it is preferable to increase the graft ratio. In other words, although the adhesive strength is improved even when the graft ratio is low, there is a tendency for the adhesive strength to be further improved when the graft ratio is increased. In addition, there is a tendency for a warp of a molded object formed using the resin composition for a stereo-forming apparatus to be reduced by having a reactive group in the component (B). One of the reasons for this is that a presence of the reactive group improves adhesive strength. However, from a viewpoint of further reducing a warp of the resin composition for a stereo-forming apparatus, it is preferable to increase the graft ratio. In other words, although a warp is reduced even when the graft ratio is low, there is a tendency for the warp to be further reduced when the graft ratio is increased. However, when an adhesive strength is excessively improved, there may be a case where a molded object formed of a resin composition for a stereo-forming apparatus and a stage of a stereo-forming apparatus or a resin sheet placed on the stage adhere firmly, and it may be difficult to remove the molded object from the stage or the resin sheet. Therefore, it is preferably to set an upper limit for the graft ratio from a viewpoint of facilitating a removal of the molded object from the stage or the resin sheet.

Therefore, when the component (B) is a graft copolymer (for example, MAPP), the graft ratio is preferably 1.0% or more, preferably 2.0% or more, and preferably 3.0% or more, from the viewpoint of improving adhesive strength and/or reducing a warp. Moreover, from the viewpoint of facilitating the removal of the molded object, the graft ratio is preferably 4.0% or less, and preferably 3.5% or less. The graft ratio is preferably 1.0% or more from a viewpoint of maintaining appropriate physical properties of the resin composition for a stereo-forming apparatus and suppressing a containing amount of the component (B) with respect to the component (A) to suppress manufacturing costs.

(Containing Amount of Component (B))

When a containing ratio of the component (B) is increased, a warp of a molded object tends to be reduced, and when the containing ratio is decreased, the effect of reducing the warp tends to decrease. Therefore, with respect to 100 parts by mass of the component (A), the containing ratio of component (B) is preferably more than 10.3 parts by mass, preferably 15 parts by mass or more, and preferably 20 parts by mass or more, and preferably 37 parts by mass or less, preferably 35 parts by mass or less, and preferably 30 parts by mass or less. In addition, when the polymer of the molecular chain of the component (B) is based on a homo-polymer (for example, when the component (B) is MAPP, the base polymer is PP, and the PP is homo PP, etc.), there may be a case where a warp increases when the containing amount of the component (B) is increased. Therefore, the containing amount of the component (B) is preferably 37 parts by mass or less, as described above.

The containing amount of the component (A) is 50 wt% or more, may be 60 wt% or more, may be 65 wt% or more, is 90 wt% or less, may be 85 wt% or less, and may be 80 wt% or less. The containing amount of the component (B) is 5 wt% or more, may be 10 wt% or more, may be 15 wt% or more, may be 25 wt% or less, and may be 20 wt% or less.

(Range of Value Obtained by Multiplying Containing Ratio of Component (B) and Graft Ratio)

As a result of various investigations by the present inventors, it has been found that an adhesive strength of the resin composition for a stereo-forming apparatus is improved and a warp of the resin composition for a stereo-forming apparatus (and/or molded object) is reduced by including the component (B) in the component (A) in a predetermined ratio. Furthermore, as a result of detailed study by the present inventors, it has been found that, by setting a ratio of the reactive group of the component (B) included in the resin composition for a stereo-forming apparatus to a predetermined range, the adhesive strength of the resin composition for a stereo-forming apparatus is further improved and the warp is further reduced.

That is, the present inventors have found that, when the component (B) is a graft copolymer, provided that the value obtained by multiplying the ratio of the mass of the component (B) to the total mass of the resin composition for stereo-forming apparatus by a graft ratio of the component (B) (hereinafter, may be referred to as an "amount of reactive group introduced") is in an optimum range, it is possible to achieve the most preferable balance between an improvement of adhesive strength and a reduction of warp of the resin composition for a stereo-forming apparatus. For example, when the ratio of the mass of the component (B) to the total mass of the resin composition for stereo-forming apparatus is 15 wt% and the graft ratio is 1.1%, the amount of reactive group introduced is calculated as $0.15 \times 0.011 \times 100 = 0.165(\%)$. Specifically, the amount of reactive group introduced is required to be less than 0.57%, and when the amount is 0.165% or more and 0.51% or less, it has been found that the improvement of an adhesive strength of the resin composition for a stereo-forming apparatus and the reduction of a warp can be achieved with the most preferable balance.

An amount of reactive group introduced is preferably 0.165% or more, and may be 0.18% or more, and may be 0.2% or more, from a viewpoint of reducing a warp by ensuring that an adhesive strength between the resin composition for a stereo-forming apparatus and/or the molded object and the stage of the stereo-forming apparatus or the protective sheet on the stage is an adhesive strength that can appropriately adhere the resin composition for a stereo-forming apparatus and/or the molded object to the stage of the stereo-forming apparatus or the protective sheet. In addition, the amount of reactive group introduced is preferably 0.51% or less, may be 0.4% or less, and may be 0.3% or less, from a viewpoint of suppressing for the adhesive strength between the resin composition for a stereo-forming apparatus and/or the molded object and the stage of the stereo-forming apparatus or the protective sheet on the stage to be an adhesive strength that allows the resin composition for a stereo-forming apparatus and/or the molded object to be appropriately removed from the stage of the stereo-forming apparatus or the protective sheet (for example, the adhesive strength that allows removal of the molded object without damaging the protective sheet, because in a case where the adhesive strength between the molded object and the protective sheet is too high, the protective sheet is damaged when the molded object is removed).

[Low-crystalline Homo-polypropylene (C)]

The resin composition for a stereo-forming apparatus according to the present exemplary embodiment can further include a low-crystalline homo-polypropylene (C) (hereinafter sometimes referred to as a "component (C)"). By including the component (C), a warp of the resin composition for a stereo-forming apparatus can be further reduced.

According to the present exemplary embodiment, the low-crystalline homo-polypropylene (C) is a homo-polypropylene, of which melting point ($T_m$), defined by the peak top of a peak observed on the highest temperature side of a melting endothermic curve that was measured, using a differential scanning calorimeter (DSC), by keeping the temperature at -10°C for 5 minutes in a nitrogen atmosphere and then raising a temperature at a rate of 10° C/min., is 0°C or higher and 120°C or lower. The weight-average molecular weight of the component (C) is preferably 10,000 or more, more preferably 30,000 or more, further preferably 50,000 or more, preferably 200,000 or less, and more preferably 150,000 or less. The weight-average molecular weight can be obtained using a high-temperature gel permeation chromatography (high-temperature GPC) on polystyrene conversion basis and then calculated in polypropylene conversion basis using the Q factor.

The component (C) includes a low-elasticity/low-molecular-weight polyolefin. For example, a low-elasticity/low-molecular-weight polyolefin (commodity name: L-MODU S600, L-MODU S901, manufactured by Idemitsu Kosan Co., Ltd.), of which melt flow rate (MFR) is 500 (g /10 min) (230 °C., 2.16 kg) or less, is preferable, and a low-elasticity/low-molecular-weight polyolefin (commodity name: L-MODU S901, manufactured by Idemitsu Kosan Co., Ltd.), of which melt flow rate (MFR) is 100 (g /10 min) (230 °C., 2.16 kg) or less, is more preferable.

(Containing Amount of Component (C))

When a containing ratio of the component (C) increases, a warp of a molded object tends to decrease, and when a containing ratio of the component (C) increases further, a rigidity of the resin composition for a stereo-forming apparatus is likely to decrease. Therefore, with respect to 100 parts by mass of the component (A), the containing ratio of the component (C) is preferably 5 parts by mass or more, preferably 10 parts by mass or more, and preferably 15 parts by mass or more, and preferably 60 parts by mass or less, preferably 55 parts by mass or less, preferably 45 parts by mass or less, and preferably 30 parts by mass or less. A containing amount of the component (C) may be 5 wt% or more, 10 wt% or more, and 40 wt% or less, 30 wt% or less, or 20 wt% or less.

Here, by setting the containing amount of the component (C) to 10 wt% or more and 20 wt% or less, an effect of suppressing a warp of the resin composition for a stereo-forming apparatus and/or the molded object is improved. When the containing amount of the component (C) is less than 10 wt%, the effect of suppressing a warp is exhibited, but the effect of suppressing a warp is lower than a case where the containing amount of the component (C) is 10 wt% or more. In addition, when the containing amount of the component (C) exceeds 30 wt%, the rigidity of the resin composition for a stereo-forming apparatus may decrease, and when a resin filament formed of such resin composition for a stereo-forming apparatus is used in a stereo-forming apparatus, a filament jamming may occur in a filament feed unit.

[Filler]

The resin composition for a stereo-forming apparatus according to the present exemplary embodiment may contain a filler from a viewpoint of improving strength. The filler is not particularly limited as long as it has a size that allows the filler to pass through a nozzle of a stereo-forming apparatus. Examples of fillers include glass fiber, carbon fiber, calcium carbonate, and/or talc.

<Other Contained Substances>

Various contained substances such as bulking agents, plasticizers, moisture absorbers, property modifiers, reinforcing agents, colorants, flame retardants, antioxidants, anti-aging agents, conductive agents, antistatic agents, UV absorbers, UV dispersants, solvents, fragrances, deodorants, pigments, dyes, and diluents may be added to the resin composition for a stereo-forming apparatus as needed to the extent that the physical properties or the like of the resin composition for a stereo-forming apparatus are not affected.

<Application Field>

The resin composition for a stereo-forming apparatus according to the present exemplary embodiment can be used for various purposes. Specifically, the resin composition for a stereo-forming apparatus can be used for various products such as various structures, various parts (electric/electronic parts, automobile parts, etc.), home appliances, housing/building materials, and packaging materials. Since the resin composition for a stereo-forming apparatus according to the present exemplary embodiment has an appropriate adhesive strength to a stage of the stereo-forming apparatus and/or a resin sheet placed on the stage, the resin composition for a stereo-forming apparatus can be used as a filament for a stereo-forming apparatus without using an adhesive conventionally used. The filament for a stereo-forming apparatus can then be used to manufacture a molded object of the desired shape with a stereo-forming apparatus. Further, the resin composition for a stereo-forming apparatus according to the present exemplary embodiment can be molded into a pellet shape and used as a pellet for a stereo-forming apparatus. Similar to the filament for a stereo-forming apparatus, a pellet for a stereo-forming apparatus can also be used in a stereo-forming apparatus in which a pellet-shaped material is supplied for molding.

<Method for Manufacturing Resin Composition for A Stereo-forming Apparatus>

The method for manufacturing the resin composition for a stereo-forming apparatus according to the present exemplary embodiment is not particularly limited, for example, the resin composition for a stereo-forming apparatus can be manufactured by containing a predetermined amount of the component (A) and the component (B), and further adding the component (C) and other contained substances as necessary and then stirring them. The order in which each component and other contained substances are added is not particularly limited and can be determined as appropriate.

<Manufacturing Method for Molded Object>

Using the resin composition for a stereo-forming apparatus according to the present exemplary embodiment, a resin filament for a stereo-forming apparatus (3D printer) is produced using a known technique. The produced resin filament is set in a stereo-forming apparatus, and a molded object is manufactured by molding under a predetermined condition. In manufacturing of a molded object, molding can be performed directly on the stage of the stereo-forming apparatus using a resin filament formed by using the resin composition for a stereo-forming apparatus according to the present exemplary embodiment. However, from a viewpoint of preventing a stage wear or the like, it is preferable to place a protective sheet on the stage. There is no particular limitation on the protective sheet as long as the protective sheet can be attached to the stage. For example, a polyimide sheet, an acrylic resin sheet, a PP sheet, a masking tape, a curing tape, and/or a cellophane tape can be used as the protective sheet. In the case where these protective sheets are used, it is the same that the amount of reactive group introduced is preferably in the range described above. When a random polymer (for example, random polypropylene) is used as the component (A), a molded object can be manufactured without a protective sheet.

<Effects of Embodiment>

Conventionally, in manufacturing of a molded object using a stereo-forming apparatus, it is required to attach a protective sheet (platform tape) to a stage of the stereo-forming apparatus in order to prevent the stage from wearing due to adhesion of the molded object. When using a PP resin filament, since PP itself has no adhesiveness to the stage or the protective sheet, an adhesive (water-soluble adhesive) is required be applied to a surface of the stage or the protective sheet to fix the molded object to the stage or the protective sheet. In addition, PP itself has a large amount of warp that occurs during molding, making it difficult to ensure moldability.

However, in the resin composition for a stereo-forming apparatus according to the exemplary embodiment, the component (A) contains the component (B), which allows the resin composition to exert a prescribed adhesive strength to a stage of the stereo-forming apparatus and a general protective sheet (platform tape), and also reduces a warp of the molded object. That is, by containing the component (B) in the prescribed ratio to the component (A), the resin composition for a stereo-forming apparatus can exert an appropriate adhesiveness to the stage of the stereo-forming apparatus and the platform tape attached on the stage, as well as suppress a warp and a shrinkage during molding, thereby improving moldability. Therefore, according to the resin composition for a stereo-forming apparatus according to the present exemplary embodiment, it is possible to suppress the warp and the shrinkage of the molded object by exhibiting an appropriate adhesive strength to the stage and the platform tape, and it is also possible to fix the molded object on the stage and/or the protective sheet without a need to apply adhesive to the stage and the protective sheet (platform tape). In addition, since the resin composition for a stereo-forming apparatus exhibits appropriate adhesiveness, it is possible to prevent the platform tape from being damaged even when a molded object is molded on the platform tape and the molded object is removed from the platform tape. As a result, with the resin composition for a stereo-forming apparatus, it is possible to manufacture a molded object with good moldability and to ensure an ease of removing the manufactured molded object from the stage and the protective sheet, and it is possible to save the trouble of applying adhesive and to reduce the number of replacements of protective sheets.

Examples

Hereinafter, the present invention is described more specifically with reference to Examples. It goes without saying that these examples are illustrative and should not be construed in a limited manner.

(Preparation of Examples 1 to 11 and Comparative Examples 1 to 13)

Each of the contained substances was contained at the containing ratio shown in Table 1, and the contained substances were mixed and stirred to prepare the resin compositions for a stereo-forming apparatus according to Examples 1 to 11. In addition, each of the contained substances was contained at the containing ratio shown in Table 3, and the contained substances were mixed and stirred to prepare the resin compositions for a stereo-forming apparatus according to Comparative examples 1 to 13. In Tables 1 and 3, the unit of the containing amount of each contained substance is "parts by mass". In Table 2, the unit of the containing amount of each contained substance in Table 1 is represented as "wt%", and in Table 4, the unit of the containing amount of each contained substance in Table 3 is represented as "wt%".

[Table 1]

| Contained substance (parts by mass) | | | Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 |
| (A) | PP | PM731M | 100 | 100 | 100 | 100 | 100 | 100 | 100 | 100 | 100 | 100 | 100 |
| (B) | MAPP | MG250P | 17.6 | 20.0 | 23.1 | 27.3 | 28.4 | - | - | - | - | - | - |
| | | UMEX 1010 | - | - | - | - | - | 17.6 | - | - | - | - | - |
| | | MG441P | - | - | - | - | - | - | 12.8 | 17.8 | - | - | - |
| | | kayabrid | - | - | - | - | - | - | - | - | 17.9 | 11.1 | 28.6 |
| | | MG670P | - | - | - | - | - | - | - | - | - | - | - |
| (C) | L-MODU | L-MODU S901 | - | 13.3 | 30.8 | 54.5 | 20.9 | - | 15.4 | 19.2 | 10.3 | 12.3 | 14.3 |
| Weight-average molecular weight of MAPP (Mw) | | | 58,000 | 58,000 | 58,000 | 58,000 | 58,000 | 30,000 | 36,000 | 36,000 | 65,000 | 65,000 | 65,000 |
| MAPP graft ratio | | | 1.1% | 1.1% | 1.1% | 1.1% | 1.1% | 3.4% | 3.0% | 3.0% | 2.0% | 2.0% | 2.0% |
| MAPP Containing ratio $\times$ Graft ratio | | | 0.165% | 0.165% | 0.165% | 0.165% | 0.21% | 0.51% | 0.30% | 0.39% | 0.28% | 0.18% | 0.40% |
| Evaluation | Number of molding layers (layers) | | 5 | 5 | 5 | 5 | 5 | 5 | 5 | 5 | 5 | 5 | 5 |
| | Warp (mm) | | 0.43 | 0.32 | 0.34 | 0.34 | 0.27 | 0.49 | 0.99 | 0.47 | 0.62 | 0.78 | 0.57 |
| | Adhesive strength (N/cm$^2$) | | 7.78 | 6.84 | 7.20 | 8.82 | 8.66 | 7.78 | 5.83 | 7.71 | 5.78 | 6.32 | 10.67 |

[Table 2]

| Contained substance (wt%) | | | Examples | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| (A) | PP | PM731M | 85 | 75 | 65 | 55 | 67 | 85 | 78 | 73 | 78 | 81 | 70 |
| (B) | MAPP | MG250P | 15 | 15 | 15 | 15 | 19 | - | - | - | - | - | - |
| | | UMEX 1010 | - | - | - | - | - | 15 | - | - | - | - | - |
| | | MG441P | - | - | - | - | - | - | 10 | 13 | - | - | - |
| | | kayabrid | - | - | - | - | - | - | - | - | 14 | 9 | 20 |
| | | MG670P | - | - | - | - | - | - | - | - | - | - | - |
| (C) | L-MODU | L-MODU S901 | - | 10 | 20 | 30 | 14 | - | 12 | 14 | 8 | 10 | 10 |

[Table 3]

| Contained substance (parts by mass) | | | Comparative Examples | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| (A) | PP | PM731M | 100 | 100 | 100 | 100 | 100 | 100 | 100 | 100 | 100 | 100 | 100 | 100 | 100 |
| (B) | MAPP | MG250P | - | - | - | - | - | 10.3 | - | - | - | - | - | - | - |
| | | UMEX 1010 | - | - | 37.3 | - | - | - | - | - | - | - | - | - | 2.1 |
| | | MG441P | 37.3 | 40.0 | - | - | - | - | 4.2 | 7.1 | - | - | - | - | - |
| | | kayabrid | - | - | - | - | - | - | - | - | - | - | - | - | - |
| | | MG670P | - | - | - | - | - | - | - | - | 1.2 | 5.3 | 16.2 | 40.0 | - |
| (C) | L-MODU | L-MODU S901 | 58.8 | 60.0 | 58.8 | 11.1 | 42.9 | 4.6 | 36.6 | 11.9 | 16.5 | - | 18.9 | 60.0 | 4.3 |
| Weight-average molecular weight of MAPP (Mw) | | | 36,000 | 36,000 | 30,000 | - | - | 58,000 | 36,000 | 36,000 | 165,660 | 165,660 | 165,660 | 165,660 | 30,000 |
| MAPP graft ratio | | | 3.0% | 3.0% | 3.4% | - | - | 1.1% | 3.0% | 3.0% | 1.0% | 1.0% | 1.0% | 0.01 | 0.034 |
| MAPP Containing ratio × Graft ratio | | | 0.57% | 0.60% | 0.65% | - | - | 0.10% | 0.09% | 0.18% | 0.01% | 0.05% | 0.12% | 0.20% | 0.07% |
| Evaluation | Number of molding layers (layers) | | 5 | 5 | 5 | 1.00 | 1.30 | 3.83 | 4.00 | 2.53 | 1.60 | 1.13 | 2.50 | 2.23 | 2.40 |
| | Warp (mm) | | 0.47 | 0.44 | 0.48 | 3.20 | 1.78 | 1.66 | 0.89 | 1.25 | 2.29 | 2.95 | 1.80 | 1.35 | 3.35 |
| | Adhesive strength $(N/cm^2)$ | | 16.67 | 12.86 | 12.55 | 0.01 | 0.54 | 3.81 | 1.36 | 2.04 | 0.05 | 0.03 | 1.61 | 1.15 | 0.89 |

[Table 4]

| Contained substance (wt%) | | | Comparative Examples | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| (A) | PP | PM731M | 51 | 50 | 51 | 90 | 70 | 87 | 71 | 84 | 85 | 95 | 74 | 50 | 94 |
| (B) | MAPP | MG250P | - | - | - | - | - | 9.0 | - | - | - | - | - | - | - |
| | | UMEX 1010 | - | - | 19 | - | - | - | - | - | - | - | - | - | 2 |
| | | MG441P | 19 | 20 | - | - | - | - | 3 | 6 | - | - | - | - | - |
| | | kayabrid | - | - | - | - | - | - | - | - | - | - | - | - | - |
| | | MG670P | - | - | - | - | - | - | - | - | 1 | 5 | 12 | 20 | - |
| (C) | L-MODU | L-MODU S901 | 30 | 30 | 30 | 10 | 30 | 4 | 26 | 10 | 14 | - | 14 | 30 | 4 |

Details of the contained substances in Tables 1 to 4 are as follows.

(Component A: Thermoplastic Resin)

PM731M (random polypropylene manufactured by SunAllomer Ltd.)

(Component B: Polymer Having Reactive Groups and Non-polar Polymer Molecular Chains)

MG250P (Maleic anhydride-modified polypropylene manufactured by Riken Vitamin Co., Ltd., weight-average molecular weight: 58,000, graft ratio: 1.1%)
UMEX 1010 (Maleic anhydride-modified polypropylene manufactured by Sanyo Chemical Industries, Ltd., weight-average molecular weight: 30,000, graft ratio: 3.4%)
MG441P (Maleic anhydride-modified polypropylene manufactured by Riken Vitamin Co., Ltd., weight-average molecular weight: 36,000, graft ratio: 3.0%)
kayabrid (Kayabrid002P, maleic anhydride-modified polypropylene manufactured by KAYAKU NOURYON CORPORATION, weight-average molecular weight: 65,000, graft ratio: 2.0%)
MG670P (Maleic anhydride-modified polypropylene manufactured by Riken Vitamin Co., Ltd., weight-average molecular weight: 165,660, graft ratio: 1.0%)

(Component C: Low-crystalline Homo-polypropylene)
L-MODU (L-MODU S901, low crystalline polypropylene manufactured by Idemitsu Kosan Co., Ltd., MFR (g/10 min) (230°C, 2.16 kg) = 50)

[Evaluation of Moldability]

The evaluation of moldability of the resin composition for a stereo-forming apparatus according to Examples 1 to 11 and the resin composition according to Comparative Examples 1 to 13 was performed under the following conditions.

<3D Printer Used for Moldability Evaluation>

3D printer: Da Vinci Jr.Pro.X + (manufactured by XYZ printing, Inc.)

<Molding Conditions>

- Stage protective sheet: XYZ printing DAVINCI Pro series dedicated platform tape (acrylic resin sheet)
- Nozzle temperature: 260°C
- Stage temperature: 40°C
- Moldability evaluation items: number of molding layers, warp, and adhesive strength

[Measurement Procedure of Number of Molding Layers and Warp]

For the resin composition for a stereo-forming apparatus according to Examples 1 to 11 and the resin composition according to Comparative Examples 1 to 13, molding were performed under the following shapes and conditions.

- Shape: a flat plate having thickness of 1 mm × length of 50 mm × width of 50 mm (A flat plate obtained by laminating 5 layers. The thickness per layer is 0.2 mm.).
- Molding speed: 15 mm/s

(Method for Evaluating Molding Layer Number)

When a molded object was peeled off from a stage of a 3D printer during the molding, or when the molded object warped from the stage and a nozzle were in contact with each other, the molding was stopped at the time of peeling and at the time of contact, the number of layers at the time of stopping was defined as the number of molding layers. When the molded object was not peeled off from the stage or did not warp from the stage and come into contact with the nozzle during the molding, the molding was stopped at the time point when the five-layer layering was completed.

(Method for Evaluating Warp)

The molded object was left to stand still at 23°C for 24 hours without being peeled off from the stage of the stereo-forming apparatus from the time point the molding was stopped, including the examples (Comparative Examples 4 to 13) stopped in a middle of the molding. Thereafter, the molded object was scanned with a 3D scanner, and the maximum height of the four corners of the molded object were measured. Then, a difference between the lowest point on diagonal lines of four corners and an average value of heights of the highest points at both ends was measured on two diagonal lines, and an average value of the two differences was taken as a value of warp. That is, in measurement data of the 3D scanner, a height of the stage was set to 0, and a point where the height was maximum within a range of 10 mm × 10 mm at the four corners of the molded object was measured. Then, diagonal lines were drawn at four points obtained in this measurement. Subsequently, a point having the lowest height on the diagonal line was defined as A, two points used for drawing the diagonal line were defined as B and C, respectively, and a warp was calculated by the following calculation formula.

$$\text{(Calculation Formula) } Warp = (B + C)/2 - A$$

A warp was calculated at each of two diagonal lines, and an average value thereof was taken as the warp of the molded object.

[Measurement of Adhesive Strength]

For the resin composition for a stereo-forming apparatus according to Examples 1 to 11 and the resin composition according to Comparative Examples 1 to 13, molding were performed under the following shapes and conditions.

- Shape: a flat plate with thickness of 0.2 mm × length of 25 mm × width of 25 mm (a flat plate with one layer)
- Molding speed: 15 mm/s

(Method for Measuring Adhesive Strength)

The molded objects of the resin composition for a stereo-forming apparatus according to Examples 1 to 11 and the molded objects of the resin composition according to Comparative Examples 1 to 13 were left standing in a room at 23°C for 5 hours without being peeled off from the stage of the stereo-forming apparatus after molding. Thereafter, a double-sided tape was stuck to the entire surface of the molded object and adhered to a tension jig. Then, the tension jig was pulled at 2 mm/min with a universal testing machine, and the maximum test force/sample area ($N/cm^2$) was defined as an adhesive strength.

[Effect of MAPP type on Warp]

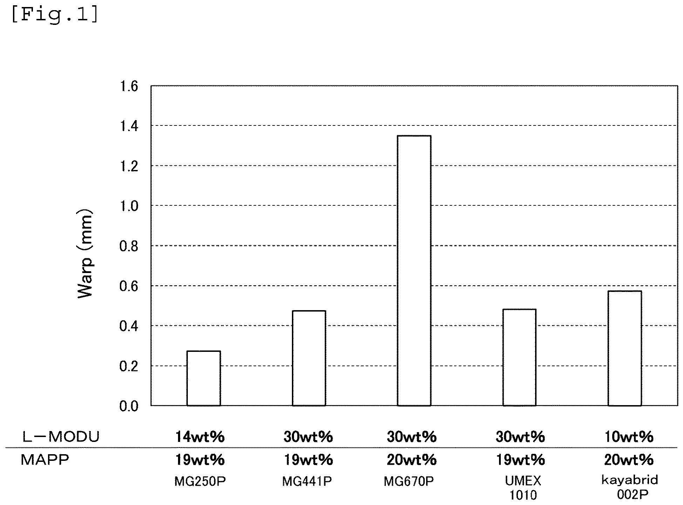

Fig. 1 shows a warp of a molded object with respect to MAPP type. Fig. 1 was prepared based on the results of Example 5, Example 11, Comparative Example 1, Comparative Example 3, and Comparative Example 12.

Based on the results of Examples 1 to 11 and Comparative Examples 1 to 13 (all 24 data) and a non-linear prediction model constructed by Gaussian Process Regression using these results, an effect of MAPP type on warp was confirmed. As a result, as shown in Fig. 1, it was shown that when MAPP (MG250P) having a weight-average molecular weight of 58,000 and a graft ratio of 1.1% was used, warp was the smallest. Further, it was shown that the warp in the case of using MAPP (MG441P) having a weight-average molecular weight of 36,000 and a graft ratio of 3.0% was the second smallest, the warp in the case of using MAPP (UMEX 1010) having a weight-average molecular weight of 30,000 and a graft ratio of 3.4% was the third smallest, and the warp in the case of using MAPP (kayabrid 002P) having a weight-average molecular weight of 65,000 and a graft ratio of 2.0% was the fourth smallest. In addition, it was shown that when MAPP (MG670P) having a weight-average molecular weight of 165,660 and a graft ratio of 1.0% was used, a warp occurred to the extent that molding was difficult.

That is, among the MAPPs used in the present Examples, a use of an MAPP (MG250P) having a low graft ratio of about 1% with a weight-average molecular weight of about the middle tended to minimize the warp, and in the case of an MAPP having a graft ratio of 1.0% or more and less than 3.0%, the warp tended to increase as the weight-average molecular weight became higher molecular weight (kayabrid002P and MG670P). However, it was shown that when the graft ratio was 3.0% or more, a warp occurring could be reduced even when the weight-average molecular weight was less than 58,000.

In the case of MAPP (MG441P and UMEX 1010) having a graft ratio of 3.0% or more, it is estimated that crystallization is likely to proceed starting from MAPP in the component (A) due to a presence of the maleic anhydride-modified part and the low molecular weight PP, therefore it is estimated that the warp is larger than that of MG250P although the weight-average molecular weight is lower than that of MG250P. In addition, from a viewpoint of an increase in the containing amount with respect to the component (A) and from a viewpoint of physical properties and cost of the resin composition for a stereo-forming apparatus, MAPP having a graft ratio of 1% or less is not preferable.

Here, in Fig. 1, since there is a difference in the containing amount of L-MODU, complete horizontal comparison is not performed. However, due to the following reasons, even when there is a difference in the containing amount of L-MODU, it is considered that there is no significant difference in an amount of occurrence of warp due to a difference in MAPP type, and it can be said that the above results are reliable.

That is, in the present Examples, it has been confirmed that the significant difference does not occur using a software package (Anaconda) for executing statistical processing, machine learning, and the like. First, this software package was used to construct a non-linear prediction model by Gaussian Process Regression using 24 data of Examples and Comparative Examples. A kernel function $K_{GPR}$ used for this non-linear prediction model creation is as follows.

[Mathematical formula 1]

$$K_{GPR}(\mathbf{x}^{(i)}, \mathbf{x}^{(j)}) = \theta_0 \exp\left\{ -\frac{1}{2} \sum_{k=1}^{m} \theta_{1,k}(\mathbf{x}_k^{(i)} - \mathbf{x}_k^{(j)})^2 \right\} + \theta_2$$

In the above formula, $\theta_0$, $\theta_{1,k}$, and $\theta_2$ are all hyperparameters. m is the number of explanatory variables x (thus, m = 3). There are the following three types of explanatory variables.

- Addition amount of MAPP
- Addition amount of L-MODU
- MAPP type

$x^{(i)}$ and $x^{(j)}$ respectively indicate values of the kth experimental condition among the experimental conditions. Since the number of vectors of the experimental conditions is 24, which is identical to the number of experimental data, $1 \leq i$ and $j \leq 24$ are satisfied. A non-linear prediction model was created using the above software using the above kernel function, experimental condition x, and data of measured value y of warp.

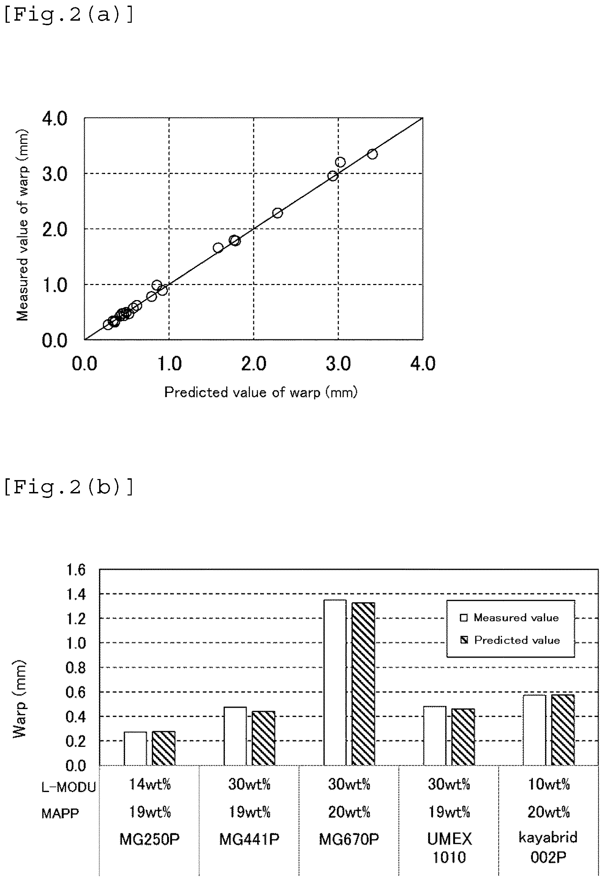

Fig. 2 shows a comparison between measured values according to Examples and Comparative Examples and predicted values by a non-linear prediction model. Specifically, Fig. 2(a) is a graph for confirming an accuracy of the non-linear prediction model. Fig. 2(b) shows a comparison between the predicted value of warp obtained from the created non-linear prediction model and the measured value of warp.

As shown in Fig. 2(a), a vertical axis represents the measured value of warp obtained in Examples and Comparative Examples, and a horizontal axis represents the predicted value of warp. Then, the accuracy of the non-linear prediction model was evaluated using Fig. 2(a). In this graph, a plot at a position closer to a diagonal line indicates that the model has higher accuracy. Referring to Fig. 2(a), it was shown that most of the plots were located at positions close to a diagonal line, and the prediction accuracy of the created model was high.

Next, as is apparent from Fig. 2(b), the obtained prediction values of the non-linear prediction model also show that the warp is the smallest when the MG250P is used, and the other prediction values also show that the warp is the second smallest when the MG441P is used, the warp is the third smallest when the UMEX 1010 is used, and the warp is the fourth smallest when the kayabrid002P is used. In addition, it was shown that when the MG670P was used, a large warp occurred even in the predicted value.

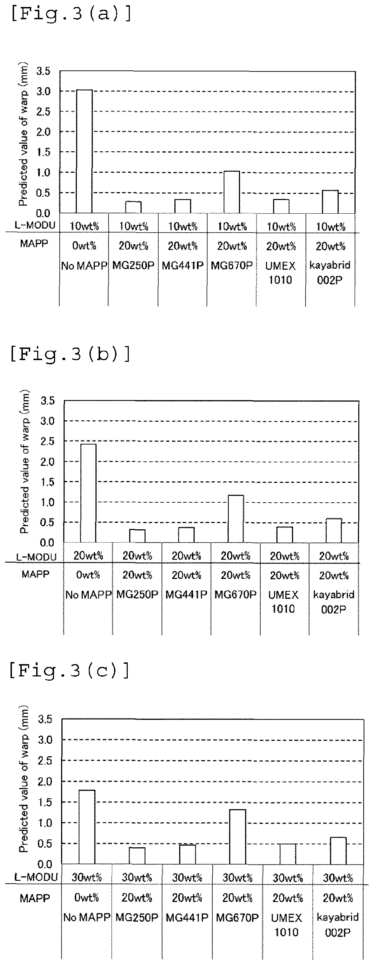

Fig. 3 shows predicted values of warp of each MAPP obtained from a non-linear prediction model. Specifically, Fig. 3(a) shows predicted values when an addition amount of L-MODU is 10 wt%, Fig. 3(b) shows predicted values when the addition amount of L-MODU is 20 wt%, and Fig. 3(c) shows predicted values when the addition amount of L-MODU is 30 wt%.

Among the prediction data obtained above, for the prediction data in which the addition amount of MAPP was 20 wt%, data in which the addition amount of L-MODU was 10 wt%, 20 wt%, or 30 wt% were taken out and compared with each other (Data without an addition of MAPP was also included for comparison.). As is apparent from Figs. 3(a) to 3(c), it was shown that a significant difference in MAPP type does not change depending on the addition amount of L-MODU even in these three types of prediction data. Therefore, it is considered that a change in the amount of warp caused by a difference in the addition amount of L-MODU is less likely to occur also in the actual measurement data. That is, although complete horizontal comparison is not performed in Fig. 1, it is considered that even when there is a difference in the containing amount of L-MODU, there is no significant difference in the amount of occurrence of warp due to the difference in MAPP type.

[Relationship Between Amount of Reactive Group Introduced and Warp]

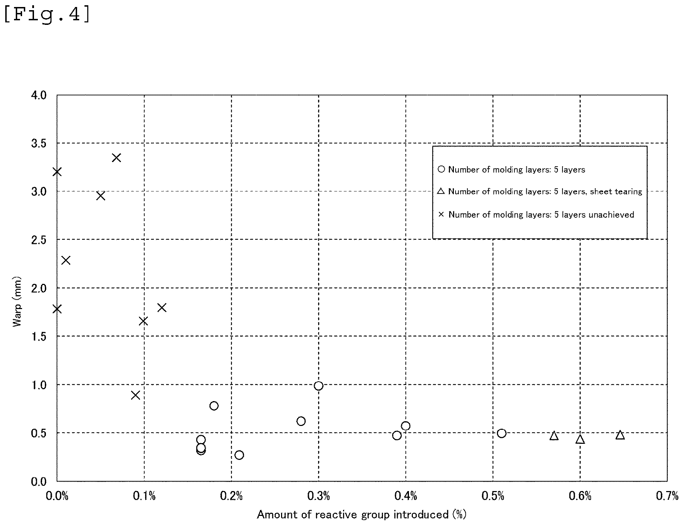

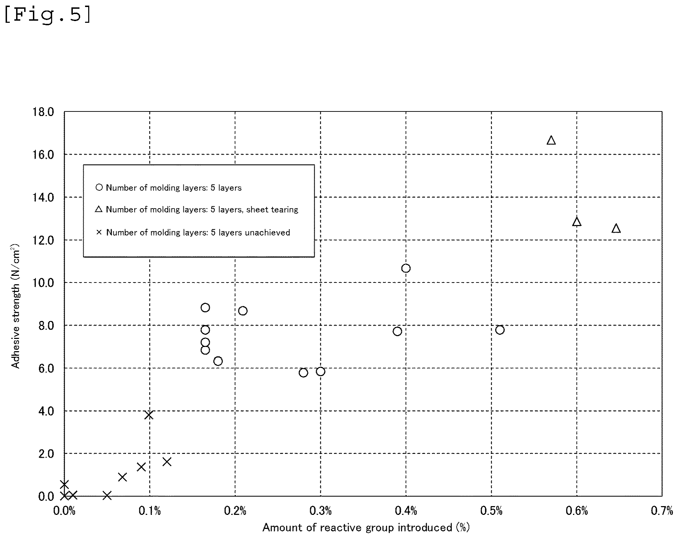

Fig. 4 shows relationships between amounts of reactive group introduced and amounts of warp of the resin composition for a stereo-forming apparatus according to Examples and the resin composition according to Comparative Examples. In Examples and Comparative Examples, the amount of reactive group introduced refers to the amount of maleic acid introduced. Fig. 5 shows a relationship of an adhesive strength with respect to amounts of reactive group introduced of the resin composition for a stereo-forming apparatus according to Examples and the resin composition according to Comparative Examples.

In Fig. 4, the vertical axis represents the measured value (mm) of warp, and the horizontal axis represents the amount of reactive group introduced. In Fig. 4, "○", "△", and "×" indicate the following.

"○": The number of molded layers was five, and one that could be molded (molding was possible).
"△": The number of molded layers was five, but a sheet was damaged when the molded object was removed.
"×": The number of molded layers did not reach five.

As is apparent with reference to Fig. 4, it was shown that the molding was possible and the sheet was not damaged when the amount of reactive group introduced was 0.165% or more and less than 0.57%. When the amount of reactive group introduced was 0.57% or more, a molded object could be molded, but the sheet and the molded object were fixed (or fused), and the molded object could not be detached from the sheet without damaging the sheet. As is apparent with reference to Fig. 5, an adhesive strength of the resin composition for a stereo-forming apparatus is positively correlated with the amount of reactive group introduced (amount of maleic acid introduced in Examples). Therefore, it was shown that the amount of reactive group introduced is preferably less than 0.57% from a viewpoint of setting the adhesive strength of the resin composition for a stereo-forming apparatus to an appropriate strength. As is apparent with reference to Fig. 4, it was shown that when the amount of reactive group introduced (amount of maleic acid introduced) reached 0.165%, warp was rapidly reduced. Therefore, it was shown that the amount of reactive group introduced is preferably 0.165% or more and less than 0.57%, and more preferably 0.165% or more and 0.51% or less. For example, even when the amount of reactive group introduced was 0.165% or more as in Comparative Example 8 (see Table 3), there was a range suitable for molding in a containing ratio of the component (B) having a weight-average molecular weight lower than a weight-average molecular weight of the component (A) to the component (A), and it was shown that when the containing ratio of the component (B) to 100 parts by mass of the component (A) was 10.3 parts by mass or less or more than 37 parts by mass, appropriate molding might not be performed in some cases.

[Effect of Containing of Component (C) on Warp]

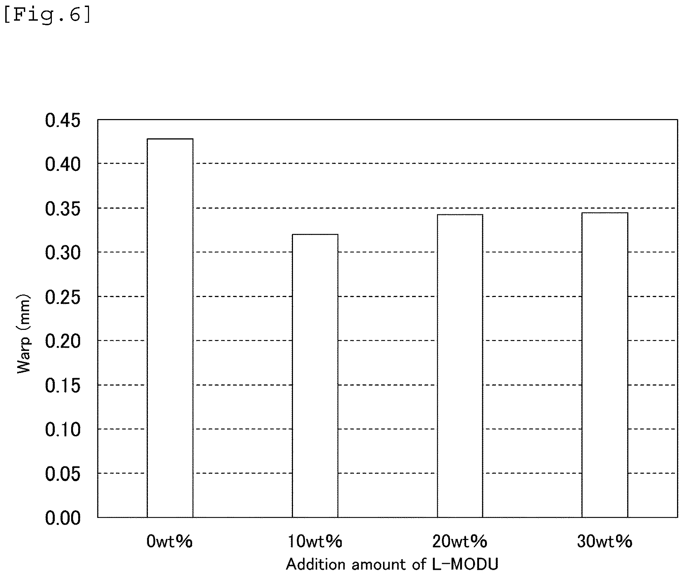

Fig. 6 shows an effect of the containing of the component (C) on warp. Fig. 6 was created based on the data of Examples 1 to 4 in which MG250P was used as the component (B) and the containing amount of MG250P was 15 wt%.
It was shown that when the component (C) was contained in an amount of 10 wt% or more in the resin composition for a stereo-forming apparatus, a warp was reduced as compared with a case where the component (C) was not contained. In particular, it was shown that when the containing amount of the component (C) was 10 wt%, the warp was minimized. The rigidity of a resin filament formed of a resin composition for a stereo-forming apparatus in which the containing amount of the component (C) is more than 30 wt% may be reduced. Therefore, during molding using the stereo-forming apparatus, the resin filament may be clogged at a gear portion that supplies the resin filament to a nozzle. Therefore, the containing amount of the component (C) is preferably 30 wt% or less.

[Relationship Between Adhesive Strength and Warp]

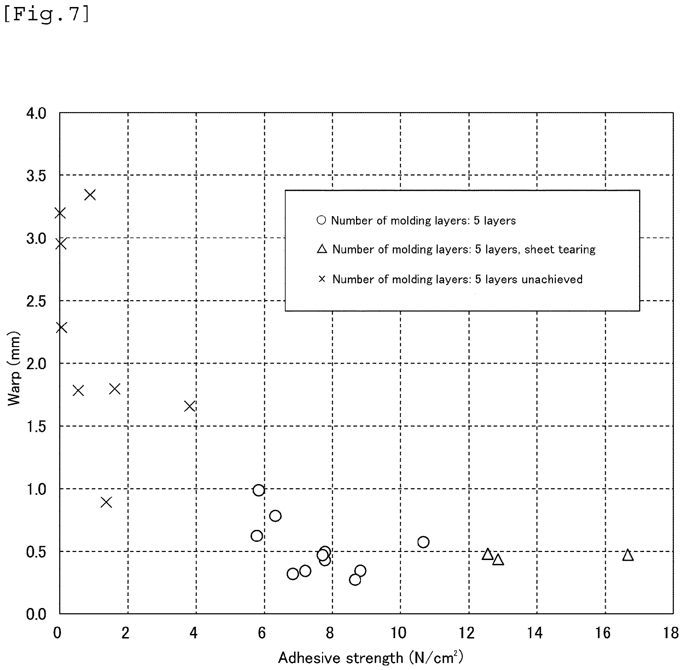

Fig. 7 shows a relationship between the adhesive strength of the resin composition for a stereo-forming apparatus according to Examples and the adhesive strength of the resin composition according to Comparative Examples and the warp. Note that "○", "△", and "×" are identical to those in Fig. 4.

As is apparent with reference to Fig. 7, it was shown that molding can be performed with a warp of 1 mm or less and an adhesive strength of 5.7 $N/cm^2$ or more and 12.7 $N/cm^2$ or less. That is, when the adhesive strength exceeds 5 $N/cm^2$, at least five layers can be molded. Alternatively, when the adhesive strength exceeds 12.7 $N/cm^2$, the molded object adheres to the protective sheet as the protective sheet of the stage is damaged when the molded object is peeled off. Therefore, it was shown that a suitable range of the adhesive strength is more than 5 $N/cm^2$ and is 12.7 $N/cm^2$ or less.

[Stage Protective Sheet]

Using a resin filament formed of a resin composition for a stereo-forming apparatus containing 67 wt% of the component (A) (PM731M), 19 wt% of the component (B) (MG250P), and 14 wt% of the component (C) (L-MODU S901) and placing a protective sheet formed of the following materials on a stage of the 3D printer, molding of a molded object was attempted (The molding conditions are identical to the "Measurement Procedure of Number of Molding Layers and Warp" above.).

(Type of Protective Sheet)

- XYZ printing DAVINCI Pro series dedicated platform tape (acrylic resin sheet)
- OPP tape (manufactured by MonotaRO Co.,Ltd., material: OPP)
- Curing tape (manufactured by ASKL Corporation, material: polyester cloth)
- Masking tape (manufactured by MonotaRO Co.,Ltd., material: Japanese paper)
- Kapton tape (manufactured by MonotaRO Co., Ltd., material: polyimide)
- No sheet

As a result, it was shown that when using protective sheets other than Kapton tape and no sheet, a molded object could be molded without warp or peeling. Although the molded object could be molded using an OPP tape, the tape was fused with the molded object, and an adhesive component remained in the molded object. Furthermore, a resin composition for a stereo-forming apparatus having a containing in which the component (A) was changed to PM940 (manufactured by SunAllomer Ltd., random copolymer) that is lower crystalline than PM731M was prepared. It was confirmed that molding can be performed using this resin composition for a stereo-forming apparatus both in the case of using Kapton tape and the case of using no sheet. That is, it was confirmed that when random polypropylene was used as the component (A), a molded object can be manufactured on a stage without using a protective sheet.

From the above, it was shown that when a resin filament formed of the resin composition for a stereo-forming apparatus according to Examples is used, it is not required to apply an adhesive to a stage and/or a protective sheet at the time of molding a molded object by a 3D printer. Furthermore, it was shown that the molded object can be detached without damaging the stage or the protective sheet when detaching the molded object molded on the stage or the protective sheet.

Although the exemplary embodiments and examples of the present invention have been described above, the exemplary embodiments and examples described above do not limit the invention according to the claims. In addition, it should be noted that not all combinations of features described in the exemplary embodiments and examples are essential for means for solving the problems of the invention.

**Claims**

1. A resin composition for a stereo-forming apparatus used in an FDM system comprising:

    a thermoplastic resin (A); and
    a polymer (B) having reactive groups and non-polar polymer molecular chains,
    wherein a weight-average molecular weight of the thermoplastic resin (A) is higher than a weight-average molecular weight of the polymer (B) having reactive groups and non-polar polymer molecular chains,
    with respect to 100 parts by mass of the thermal plastic resin (A), the polymer (B) having reactive groups and non-polar polymer molecular chains is contained more than 10.3 parts by mass and 37 parts by mass or less,
    the polymer (B) having reactive groups and non-polar polymer molecular chains is a graft-type polymer, and
    a value obtained by multiplying a ratio of a mass of the polymer (B) having reactive groups and non-polar polymer molecular chains to a total mass of the resin composition for stereo-forming apparatus by a graft ratio of the polymer (B) having reactive groups and non-polar polymer molecular chains is 0.165% or more and less than 0.57%.

2. The resin composition for a stereo-forming apparatus according to claim 1, wherein the reactive group is at least one hydrophilic reactive group selected from the group consisting of a succinic anhydride group, a carbonyl group, and a carboxyl group, and the non-polar polymer is at least one non-polar polymer selected from the group consisting of polypropylene, ethylene/vinyl acetate copolymer resin and acrylic resin.

3. The resin composition for a stereo-forming apparatus according to claim 1, further comprising a filler.

4. The resin composition for a stereo-forming apparatus according to claim 1, further comprising a low-crystalline homo-polypropylene (C), wherein the low-crystalline homo-polypropylene (C) is contained 60 parts by mass or less with respect to 100 parts by mass of the thermoplastic resin (A).

5. The resin composition for a stereo-forming apparatus according to claim 1, wherein the polymer (B) having reactive groups and non-polar polymer molecular chains is maleic anhydride-modified polypropylene (MAPP), the weight-average molecular weight of the MAPP is 20,000 or more and 100,000 or less, and a graft ratio of the MAPP is 1.0% or more and 4.0% or less.

6. The resin composition for a stereo-forming apparatus according to claim 1, wherein the thermoplastic resin (A) is polypropylene.

7. A filament for a stereo-forming apparatus, comprising the resin composition for a stereo-forming apparatus according to any one of claims 1 to 6.

8. A molded object, comprising the resin composition for a stereo-forming apparatus according to any one of claims 1 to 6.

9. A pellet for a stereo-forming apparatus, comprising the resin composition for a stereo-forming apparatus according to any one of claims 1 to 6.

[Fig.1]

| L—MODU | 14wt% | 30wt% | 30wt% | 30wt% | 10wt% |
|---|---|---|---|---|---|
| MAPP | 19wt% | 19wt% | 20wt% | 19wt% | 20wt% |
| | MG250P | MG441P | MG670P | UMEX 1010 | kayabrid 002P |

[Fig.2(a)]

[Fig.2(b)]

[Fig.3(a)]

[Fig.3(b)]

[Fig.3(c)]

[Fig.4]

[Fig.5]

[Fig.6]

[Fig.7]

<div align="center">

**INTERNATIONAL SEARCH REPORT**

</div>

| | |
|---|---|
| | International application No. |
| | **PCT/JP2023/021054** |

**A.     CLASSIFICATION OF SUBJECT MATTER**

*B33Y 80/00*(2015.01)i; *B29C 64/118*(2017.01)i; *B29C 64/314*(2017.01)i; *B33Y 70/00*(2020.01)i
FI:     B29C64/314; B29C64/118; B33Y80/00; B33Y70/00

According to International Patent Classification (IPC) or to both national classification and IPC

**B.     FIELDS SEARCHED**

Minimum documentation searched (classification system followed by classification symbols)

B33Y80/00; B29C64/118; B29C64/314; B33Y70/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| A | JP 2021-154589 A (FUJIFILM BUSINESS INNOVATION CORP.) 07 October 2021 (2021-10-07)<br>    entire text, all drawings | 1-9 |
| A | WO 2020/138174 A1 (MITSUI CHEMICALS, INC.) 02 July 2020 (2020-07-02)<br>    entire text, all drawings | 1-9 |
| A | KR 10-2020-71817 A (LOTTE CHEMICAL CORP.) 22 June 2020 (2020-06-22)<br>    entire text, all drawings | 1-9 |
| A | CN 114230925 A (CHONGQING PELITE NEW MAT. CO., LTD.) 25 March 2022 (2022-03-25)<br>    entire text, all drawings | 1-9 |
| A | CN 110835441 A (NANTONG LUBO AUTOMOBILE COMPONENTS CO., LTD.) 25 February 2020 (2020-02-25)<br>    entire text, all drawings | 1-9 |
| A | JP 2020-192704 A (TECHNO-UMG CO., LTD.) 03 December 2020 (2020-12-03)<br>    entire text, all drawings | 1-9 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 June 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/021054**

| Patent document cited in search report | | | Publication date (day/month/year) | Patent family member(s) | | | Publication date (day/month/year) |
|---|---|---|---|---|---|---|---|
| JP | 2021-154589 | A | 07 October 2021 | US 2021/0299946 A1 entire text, all drawings | | | |
| WO | 2020/138174 | A1 | 02 July 2020 | US 2022/0063185 A1 entire text, all drawings EP 3904058 A1 | | | |
| KR | 10-2020-71817 | A | 22 June 2020 | (Family: none) | | | |
| CN | 114230925 | A | 25 March 2022 | (Family: none) | | | |
| CN | 110835441 | A | 25 February 2020 | (Family: none) | | | |
| JP | 2020-192704 | A | 03 December 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020157609 A